(19) Europäisches Patentamt
European Patent Office
Office européen des brevets

(11) EP 2 640 758 B1

(12) EUROPEAN PATENT SPECIFICATION

(45) Date of publication and mention of the grant of the patent:
27.07.2016 Bulletin 2016/30

(51) Int Cl.:
C08F 214/22 (2006.01)
C08F 265/04 (2006.01)
C08F 2/44 (2006.01)
C08F 290/14 (2006.01)

(21) Application number: 11779694.6

(22) Date of filing: 10.11.2011

(86) International application number:
PCT/EP2011/069837

(87) International publication number:
WO 2012/065901 (24.05.2012 Gazette 2012/21)

(54) **PROCESS FOR PREPARING A VINYLIDENE CHLORIDE POLYMER LATEX**

VERFAHREN ZUR HERSTELLUNG VON VINYLIDENCHLORID-POLYMERLATEX

PROCESSUS DE PREPARATION DE LATEX POLYMERE DE CHLORURE DE VINYLIDÈNE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 18.11.2010 EP 10191788
17.06.2011 EP 11305758

(43) Date of publication of application:
25.09.2013 Bulletin 2013/39

(73) Proprietors:
• Solvay SA
1120 Bruxelles (BE)
• Centre National de la Recherche Scientifique (CNRS)
75016 Paris (FR)
• Université de Montpellier 2
34095 Montpellier Cedex 5 (FR)

(72) Inventors:
• DUFILS, Pierre-Emmanuel
F-39500 Tavaux (FR)
• LACROIX-DESMAZES, Patrick
F-34090 Montpellier (FR)
• GARNIER, Jérôme
F-64230 Lescar (FR)
• VANDERVEKEN, Yves
B-3001 Heverlee (BE)
• VINAS, Jérôme
B-1060 Brussels (BE)

(74) Representative: Benvenuti, Federica et al
Solvay S.A.
Département de la Propriété Intellectuelle
Rue de Ransbeek, 310
1120 Bruxelles (BE)

(56) References cited:
WO-A1-2011/029810        GB-A- 757 043
GB-A- 1 404 795            US-A- 2 580 901
US-A- 4 507 425            US-A1- 2009 203 827
US-B1- 6 559 236

• AKIVA U ET AL: "New micrometer-sized monodispersed self-assembled amphiphilic polystyrene/poly(n-butyl methacrylate) composite particles of hemispherical morphology: synthesis and characterization", COLLOIDS AND SURFACES. A, PHYSICACHEMICAL AND ENGINEERING ASPECTS, ELSEVIER, AMSTERDAM, NL, vol. 253, no. 1-3, 1 February 2005 (2005-02-01), pages 9-13, XP025315699, ISSN: 0927-7757, DOI: 10.1016/J.COLSURFA.2004.10.119 [retrieved on 2005-02-01]

**Description**

This application claims priority to European application No. 10191788.8 filed on 18/11/2010 and to European application No. 11305758.2 filed on 17/6/2011.

The present invention relates to a process for preparing a seed latex of an epoxy-containing polymer. Further, the present invention relates to a process for preparing a polyvinylidene chloride latex from said epoxy-containing polymer seed latex. Furthermore, the present invention relates to a latex comprising a polyvinylidene chloride polymer and an epoxy-containing polymer.

Polyvinylidene chloride (PVDC), the polymer of vinylidene chloride (VDC), is widely used in industry. Vinylidene chloride polymers have the advantages of being resistant materials, and possess suitable properties for applications in the food and medical industry. Specifically, vinylidene chloride polymers are known for their remarkable properties as regards permeability to gases and odours. They are thus frequently used for producing articles, in particular films, used for food and medical packaging.

One disadvantage of vinylidene chloride polymers as known in the prior art is that they have a tendency to decompose under the action of heat. It is therefore necessary to consider their thermal stability in order to avoid this drawback. Their processing is furthermore facilitated if their lubrication is improved by the addition of a suitable additive. In so far as certain additives can have an effect on the barrier properties of these polymers, it is nevertheless important to make sure that, after additivation, they have the characteristics required in terms of permeability to gases and odours, in particular to oxygen, water and to carbon dioxide.

Accordingly, there is a continuous need to further develop vinylidene chloride polymers. It has now been found that the objective to obtain polymers more resistant to external factors, such as temperature, and/or humidity variation, and/or exposure to air can be achieved by a vinylidene chloride polymer comprising an epoxy-containing polymer seed.

A first objective of the present invention is to provide a process for preparing a seed latex of an epoxy-containing polymer with a high colloidal stability, with a targeted particle size distribution and accordingly to provide an epoxy-containing seed latex polymer with these properties.

Another objective of the present invention is to provide a process for preparing a vinylidene chloride polymer latex which comprises the use of the epoxy-containing polymer seed latex.

It is also an objective of the present invention to provide a vinylidene chloride polymer latex composition, prepared using the epoxy-containing polymer seed latex and presenting increased thermal stability or resistance to external conditions, such as temperature, and/or humidity variation, and/or exposure to air, by presenting a suitable permeability to oxygen.

The polymer latexes may be employed in the fabrication of films used in any applications wherein vinylidene chloride polymers are typically used and presenting the above-mentioned properties and therefore, compared to the films fabricated according to the prior art, providing improvements such as smoother films, with better thermal stability, with an oxygen permeability particularly suitable for food and medical packaging and at least comparable with known oxygen permeabilities for food and medical packaging.

Accordingly, the above mentioned goals are met by the present invention, with a process for preparing a seed latex of an epoxy-containing polymer characterized in that said seed latex is prepared by radical polymerization in aqueous emulsion of an epoxy-containing monomer and optionally at least one comonomer, characterized in that the following are used:

- (A) an epoxy-containing monomer and optionally at least one comonomer selected from the group consisting of vinyl chloride, vinylidene chloride, styrenic monomers, allylic monomers, vinyl acetate and/or (meth)acrylic monomers corresponding to the general formula (I): $CH_2=CR_1R_2$ in which $R_1$ is chosen from hydrogen and the methyl group and $R_2$ is chosen from the -CN group and the -CO-$R_3$ group in which $R_3$ is chosen from the -OH group, the -O-$R_4$ groups with $R_4$ chosen from the linear or branched alkyl groups containing from 2 to 18 carbon atoms optionally bearing one or more -OH group, the epoxyalkyl groups containing from 2 to 10 carbon atoms and the alkoxyalkyl groups containing a total of 2 to 10 carbon atoms and finally $R_3$ is also chosen from the -$NR_5R_6$ groups in which $R_5$ and $R_6$, which are the same or different, are chosen from hydrogen and the alkyl groups containing from 1 to 10 carbon atoms, optionally bearing one or more -OH groups;
- (B) at least one radical generator;
- (C) at least one emulsifier;
- (D) water, wherein said process comprises the steps of:
- (1) introducing optionally at least one fraction of (B), at least one fraction of (C), at least one fraction of (D), optionally at least one fraction of (A) into a reactor; then,
- (2) reacting the content of the reactor at a pH in the range 3 to 8, while continuously introducing therein the balance of (A), (B), (C) and (D) ; and
- (3) obtaining an epoxy-containing polymer seed latex.

The term "polymer" is to be understood as a homopolymer (polymer comprising the repetition of the same monomer) or a copolymer (comprising the repetition of at least two different monomers, such as two or more, three or more, four or more, five or more, and so on).

The expression "radical polymerization in aqueous emulsion" is understood to mean any radical polymerization process performed in aqueous medium in the presence of at least one emulsifier and at least one radical generator. This definition specifically encompasses the three following polymerization : the so-called "conventional" polymerization in aqueous emulsion in which water-soluble radical generators are used ; the polymerization in miniemulsion also called polymerization in homogenized aqueous dispersion, in which oil-soluble or water soluble radical generators are used and an emulsion of monomer droplets is prepared by virtue of a powerful mechanical stirring and the presence of emulsifiers; and the polymerizations carried out with combination of at least one radical generator and at least one radical controller, such as, but not limited to, the polymerizations designated as Controlled Radical Polymerization (CRP) i.e. Iodine Transfer Polymerization (ITP), Reverse Iodine Transfer Polymerization (RITP), Reversible Addition Fragmentation chain Transfer polymerization (RAFT), Nitroxide Mediated Polymerization (NMP), Atom Transfer Radical Polymerization (ATRP). A radical generator is a molecule allowing to initiate the polymerization. The controller controls the growth of polymer chains during the polymerization. The radical generator and the controller may be the same molecule, or different molecules.

The invention is particularly suitable for the so-called "conventional" polymerization in aqueous emulsion which is carried out under the conditions known to a person skilled in the art. It is in this way that the polymerization is carried out with the intervention of emulsifiers and water-soluble radical generators, present in amounts known to a person skilled in the art.

The term "polymer latex" is understood to denote an aqueous dispersion of the polymer in water obtained after radical polymerization in aqueous emulsion.

The term "seed latex" is understood to denote a latex whose characteristics are such that it may be used as a base for manufacturing at least one other latex.

The epoxy-containing polymer seed latex is advantageously characterized by a solids concentration of around at least 15 wt %, preferably at least 20 wt %. The epoxy-containing polymer seed latex is advantageously characterized by a solids concentration of around at most 40 wt %, preferably at most 35 wt %.

The term "epoxy-containing" polymer is to be understood as a polymer containing epoxy groups, also designated as epoxide. An epoxy group is a cyclic ether with three ring atoms (constituted by two carbons and one oxygen atoms). The epoxy-containing polymers of the present invention are epoxy-containing homopolymers or epoxy-containing copolymers. The copolymers comprise the epoxy-containing monomer which is the main monomer and at least one other monomer, designated as comonomer, with which it is copolymerizable. The comonomer can contain an epoxy group or not.

The expression "main monomer" for epoxy-containing polymers is understood to denote the monomer present in an amount of at least 100/n wt % of the monomer blend and which will create at least 100/n wt % of the monomer units of the polymer obtained, n denoting the number of monomers of the monomer blend.

The term "epoxy-containing monomer" is understood as an ethylenically unsaturated monomer comprising at least one epoxy group. Preferably, in the process according to the present invention, the epoxy-containing monomer is chosen from the group epoxy-alkylacrylates, epoxy-alkylmethacrylates, epoxy-alkyldiacrylates, epoxy-alkyldimethacrylates,epoxy-alkyltriacrylates, epoxyalkyltrimethacrylates,epoxy-butenes, epoxy-alkylbutenes, epoxy-pentenes, epoxy-alkylpentenes, epoxy-hexenes, epoxy-alkylhexenes, epoxy-alkylstyrenes and allyl glycidyl monomers.

Examples of epoxy-containing monomers are glycidylacrylate (also designated as 2,3-epoxypropylacrylate), methylglycidylacrylate, glycidylmethacrylate (also designated as 2,3-epoxy-propylmethacrylate), methylglycidylmethacrylate, 2,3-epoxy-butylacrylate, 2,3-epoxy-butylmethacrylate, 3,4-epoxy-butylacrylate, 3,4-epoxy-butylmethacrylate, 1,2 epoxy-butenes such as 1,2-epoxy-butene-3, 1,2-epoxy-alkybutenes such as 1,2-epoxy-methylbutene-3, 1,2-epoxy-pentenes, 1,2-epoxy-hexenes, allylglycidylether (also designated as allyl 2,3-epoxypropyl ether), 2-methylallyl glycidyl ether, allylphenolglycidylethers, such as o-allylphenol glycidyl ether, m-allylphenol glycidyl ether, p-allylphenol glycidyl ether, glycidylstyrene, $\alpha$-methylglycidyl styrene, glycidyl m-methylstyrene, glycidyl p-methylstyrene, glycidyl p-chlorostyrene and glycidyl p-styrylcarboxylate.

Preferably, the epoxy-containing monomers of the present invention are chosen from the group consisting of epoxyalkylacrylates, epoxyalkylmethacrylates, epoxyalkyldiacrylates, epoxydimethacrylate, epoxyalkyltriacrylates, epoxyalkyltrimethacrylates, epoxy-alkylstyrenes and allyl glycidyl monomers.

More preferably, the epoxy-containing monomers of the present invention are chosen from the group consisting of epoxyalkylacrylates, epoxyalkylmethacrylates, epoxyalkyldiacrylates, epoxydimethacrylate, epoxyalkyltriacrylates, epoxyalkyltrimethacrylates and epoxy-alkylstyrenes.

Even more preferably, the epoxy-containing monomers of the present invention are chosen from the group consisting of glycidylacrylate (also designated as 2,3-epoxypropylacrylate), methylglycidylacrylate, glycidylmethacrylate (also designated as 2,3-epoxypropylmethacrylate) and methylglycidylmethacrylate.

Most preferably, the the epoxy-containing monomer of the present invention is selected form glycidylacrylate or glycidylmethacrylate.

In addition to the epoxy-containing monomer the epoxy-containing polymer may optionally comprise at least one comonomer copolymerizable with the epoxy-containing monomer, said at least one comonomer being selected from the group consisting of vinyl chloride, vinylidene chloride, styrenic monomers, allylic monomers, vinyl acetate and/or (meth)acrylic monomers corresponding to the general formula (I):

$$CH_2=CR_1R_2 \qquad (I)$$

in which $R_1$ is chosen from hydrogen and the methyl group and $R_2$ is chosen from the -CN group and the -CO-$R_3$ group in which $R_3$ is chosen from the -OH group, the -O-$R_4$ groups with $R_4$ chosen from the linear or branched alkyl groups containing from 2 to 18 carbon atoms optionally bearing one or more -OH group, the epoxyalkyl groups containing from 2 to 10 carbon atoms and the alkoxyalkyl groups containing a total of 2 to 10 carbon atoms and finally $R_3$ is also chosen from the -N$R_5R_6$ groups in which $R_5$ and $R_6$, which are the same or different, are chosen from hydrogen and the alkyl groups containing from 1 to 10 carbon atoms, optionally bearing one or more -OH groups.

Preferably, the comonomers for the epoxy-containing polymer are selected from the group consisting of vinyl chloride, vinylidene chloride, styrenic monomers, allylic monomers, vinyl acetate and/or (meth)acrylic monomers corresponding to the general formula (I): $CH_2=CR_1R_2$ in which $R_1$ is chosen from hydrogen and the methyl group and $R_2$ is the -CO-$R_3$ group in which $R_3$ is chosen from the -OH group, the -O-$R_4$ groups with $R_4$ chosen from the linear or branched alkyl groups containing from 2 to 18 carbon atoms optionally bearing one or more -OH group, the epoxyalkyl groups containing from 2 to 10 carbon atoms and the alkoxyalkyl groups containing a total of 2 to 10 carbon atoms.

More preferably, the comonomers for the epoxy-containing monomers are vinyl chloride, vinylidene chloride, styrenic monomers and/or (meth)acrylic monomers corresponding to the general formula (I): $CH_2=CR_1R_2$ in which $R_1$ is chosen from hydrogen and the methyl group and $R_2$ is the -CO-$R_3$ group in which $R_3$ is chosen from the -OH group, the -O-$R_4$ groups with $R_4$ chosen from the linear or branched alkyl groups containing from 2 to 18 carbon atoms optionally bearing one or more -OH group, the epoxyalkyl groups containing from 2 to 10 carbon atoms and the alkoxyalkyl groups containing a total of 2 to 10 carbon atoms.

Most preferred comonomers for the epoxy-containing monomers are chosen from the group (meth)acrylic monomers corresponding to the general formula (I): $CH_2=CR_1R_2$ in which $R_1$ is chosen from hydrogen and the methyl group and $R_2$ is the -CO-$R_3$ group in which $R_3$ is chosen from the -OH group, the -O-$R_4$ groups with $R_4$ chosen from the linear or branched alkyl groups containing from 2 to 18 carbon atoms optionally bearing one or more -OH group, the epoxyalkyl groups containing from 2 to 10 carbon atoms and the alkoxyalkyl groups containing a total of 2 to 10 carbon atoms.

Non-limiting examples of suitable (meth)acrylic monomers of formula (I) are methyl acrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide and N-methylolacrylamide.

Most preferred comonomers for the epoxy-containing monomers are vinyl chloride, vinylidene chloride and/or (meth)acrylic monomers selected from the group consisting of methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate.

In the context of the present invention, the epoxy-containing polymer is advantageously prepared as a homopolymer or copolymer of glycidylacrylate, methylglycidylacrylate, glycidylmethacrylate, or methylglycidylmethacrylate. A copolymer of glycidylacrylate, methylglycidylacrylate, glycidylmethacrylate or methylglycidylmethacrylate is preferred. More preferably the epoxy-containing polymer is a copolymer of glycidylmethacrylate.

When the epoxy-containing polymer is a copolymer of glycidylacrylate, methylglycidylacrylate, glycidylmethacrylate or methylglycidylmethacrylate, preferably of glycidylmethacrylate, the comonomers are particularly preferably chosen from the group of (meth)acrylic monomers of formula (I) as recited above.

More particularly preferably, the epoxy-containing polymer is a copolymer of glycidylmethacrylate with comonomers chosen from n-butyl acrylate and n-butyl methacrylate.

According to step (1) of the process for preparing a seed latex of an epoxy-containing polymer, optionally at least one fraction of (A) is introduced into a reactor.

When at least one fraction of (A) is introduced in step (1), preferably at least 1 %, particularly preferably at least 2.5 %, more particularly preferably at least 5 % and most particularly preferably at least 8 % of all, by weight, of (A) are introduced in step (1).

When at least one fraction of (A) is introduced in step (1), preferably at most 30 %, particularly preferably at most 25 %, more particularly preferably at most 20 % and most particularly preferably at most 15 % of all, by weight, of (A) are introduced in step (1).

Good results have been obtained without introducing a fraction of (A) in step (1), but by introducing all of (A) continuously in step (2), or by introducing around 10 % of all, by weight, of (A) in step (1) and the balance in step (2).

The process for preparing an epoxy-containing seed latex according to the invention uses (B) at least one radical generator.

The expression "at least one radical generator" is understood to mean that the process for preparing an epoxy-containing seed latex may use one or more radical generators.

In the remainder of the text, the expression "radical generator" used in the singular or plural should be understood as denoting one or more radical generators, except where denoted otherwise.

The radical generators are advantageously water-soluble. The expression "water-soluble radical generators" is understood to mean the radical generators that are soluble in water.

The radical generators are advantageously chosen from water-soluble diazo compounds and water-soluble peroxides.

As examples of water-soluble diazo compounds, mention may be made of: 2-(carbamoylazo)isobutyronitrile; 4,4'-azobis(4-cyanovaleric acid); ammonium 4,4'-azobis(4-cyanovalerate); sodium 4,4'-azobis(4-cyanovalerate); potassium 4,4'-azobis(4-cyanovalerate); 2,2'-azobis(N, N'-dimethyleneisobutyramidine); 2,2'-azobis(N, N'-dimethyleneisobutyramidine) dihydrochloride; 2,2'-azobis(2-amidinopropane) dihydrochloride; 2,2'-azobis[2-methyl-N-(1,1-bis(hydroxymethyl)-2-hydroxyethyl)propionamide] ; 2,2'-azobis[2-methyl-N-(1,1-bis(hydroxymethyl)ethyl)propionamide] ; 2,2'-azobis[2-methyl-N-(2-hydroxyethyl)propionamide]; and 2,2'-azobis(isobutyramide) dihydrate.

Preferred water-soluble diazo compounds are 4,4'-azobis(4-cyanovaleric acid), ammonium 4,4'-azobis(4-cyanovalerate), sodium 4,4'-azobis(4-cyanovalerate) and potassium 4,4'-azobis(4-cyanovalerate).

As examples of water-soluble peroxides, mention may be made of: inorganic peroxides such as sodium, potassium and ammonium persulfates; *tert*-butyl hydroperoxide; hydrogen peroxide; and perborates.

The water-soluble peroxides are preferred. Among these, alkali metal persulfates such as sodium persulfate and potassium persulfate, ammonium persulfate and also hydrogen peroxide are particularly preferred. Alkali metal persulfates and ammonium persulfate are more particularly preferred.

The radical generators can also advantageously be redox systems combining an oxidizing agent, preferably a water-soluble peroxide, and a reducing agent.

As examples of water-soluble peroxides that make up the redox system, mention may be made of the aforementioned water-soluble peroxides. As reducing agents that make up the redox system, mention may be made of alkali metal sulfites, alkali metal metabisulfites and ascorbic acid. Preferred redox systems are the alkali metal or ammonium persulfate/alkali metal sulfite, alkali metal or ammonium persulfate/alkali metal metabisulfite, alkali metal or ammonium persulfate/ascorbic acid, hydrogen peroxide/ascorbic acid, hydrogen peroxide/ferrous sulfate and *t*-butyl hydroperoxide/sulfoxylate systems. Sodium sulfite and sodium metabisulfite are particularly preferred among the alkali metal sulfites and metabisulfites respectively.

In a particularly preferred manner, the process according to the invention uses one or two radical generator(s) (B) chosen from alkali metal persulfates, ammonium persulfate and redox systems. The alkali metal persulfates can be advantageously sodium persulfate (NaPS) or potassium persulfate (KPS), also designated by $Na_2S_2O_8$ or $K_2S_2O_8$, respectively. The redox sytem is preferably the system sodium metabisulfite/potassium persulfate.

In step (1) of the process for preparing an epoxy-containing polymer seed latex, optionally at least one fraction of (B) is introduced into a reactor. By "at least one fraction of (B)" is meant "at least one portion of the amount of one radical generator", or "at least one portion of the total amount of all the radical generators" (when there are two or more radical generators), or "at least one portion of the total amount of the redox system" (when (B) is the combination of an oxidizing agent and a reducing agent as recited above). When a controller is used, and is a different molecule than the radical generator, it may be introduced independently or together with the radical generator.

In one embodiment of the process the radical generator (B) is introduced into the reactor at the time of reacting the content of said reactor, that is at the start of step (2).

In general, however, at least 50 %, preferably at least 60 %, more preferably at least 65 % and even more preferably at least 70 %, by weight, of (B) is introduced in step (1). When the radical generator is a redox system, the oxidizing agent and the reducing agent can be introduced separately.

The process for preparing an epoxy-containing seed latex according to the invention uses (C) at least one emulsifier.

The expression "at least one emulsifier" is understood to mean that the process for preparing a epoxy-containing polymer seed latex may use one or more emulsifiers.

Preferably, according to the process according to the invention, a single emulsifier is used. In the remainder of the text, the expression "emulsifier" used in the singular or plural should be understood as denoting one or more emulsifiers, except where denoted otherwise.

The emulsifiers may be anionic emulsifiers, non-ionic emulsifiers or cationic emulsifiers.

Among the anionic emulsifiers, mention may be made, non-limitingly, of alkyl sulfates such as sodium lauryl sulfate, alkyl sulphonates such as sodium dodecylbenzene sulphonate and sodium 1-hexadecane sulphonate in pure form or in the form of a mixture of $C_{12}$-$C_{20}$ alkyl sulphonates sometimes known as paraffin sulfonates, alkylaryl monosulphonates or disulphonates and dialkyl sulphosuccinates such as sodium diethylhexyl sulphosuccinate and sodium dihexyl sulfosuccinate.

Among the non-ionic emulsifiers, mention may be made, non-limitingly, of alkyl ethoxylated or alkylaryl ethoxylated derivatives, alkyl propoxylated or alkylaryl propoxylated derivatives, and sugar esters or ethers.

Among the cationic emulsifiers, mention may be made of ethoxylated alkylamines and propoxylated alkylamines.

The emulsifiers are preferably anionic emulsifiers, optionally as a mixture with one or more non-ionic emulsifiers. Anionic emulsifiers are particularly preferred.

According to step (1) of the process for preparing a seed latex of an epoxy-containing polymer according to the invention, at least one fraction of (C) is introduced into a reactor.

Preferably at least 70 % by weight, of (C), particularly preferably at least 75 % by weight, of (C) and more particularly preferably at least 80 % by weight, of (C) are introduced in step (1).

According to step (1) of the process for preparing a seed latex of an epoxy-containing polymer according to the invention, at least one fraction of (D) is introduced into a reactor.

Preferably at least 70 % by weight, of (D), particularly preferably at least 75 % by weight, of (D) and more particularly preferably at least 80 % by weight, of (D) are introduced in step (1).

Therefore, during step (1), advantageously no reaction occurs.

According to step (2) of the process for preparing a epoxy-containing polymer seed latex, the contents of the reactor are reacted.

The expression "reacting the contents of the reactor" is understood to mean that it is in step (2) that the polymerization reaction is initiated. In order to make the contents of the reactor react according to step (2), means are used by which radicals are generated within it. For this purpose, it is especially possible to heat the contents of the reactor, to expose it to an intense light radiation or when a redox system is used, to add the second component of the redox system at that time. Preferably, the contents of the reactor are heated or the second component of the redox system is added in step (2).

The temperature at which the contents of the reactor are reacted is advantageously equal to at least 15°C, preferably equal to at least 20°C, more preferably equal to at least 25°C, most preferably equal to at least 30°C. In addition, it is advantageously equal to at most 100°C, preferably equal to at most 90°C, more preferably equal to at most 80°C, most preferably equal to at most 55°C.

According to the present invention, the temperature in step (2) is advantageously comprised between 15°C and 60°C, preferably between 15°C and 55°C, more preferably between 20°C and 40°C, most preferably between 25°C and 35°C.

The process according to the invention is advantageously a continuous process. The expression "continuous process" is understood to mean that at least one fraction of one of (A), (B), (C) or (D) is introduced during step (2), contrary to a batch or discontinuous process according to which all of (A), (B), (C) and (D) would be introduced in step (1).

According to step (2), the contents of the reactor are reacted while continuously introducing in said reactor the balance of (A), (B), (C) and (D). The expression "continuous introduction" is understood to mean that the introduction is carried out over a certain time period and that it is not carried out in a single injection at a given time. It is preferably carried out with a certain rate which is particularly preferably constant.

The balance of (A), (B), (C) and (D) may be introduced independently or as a mixture. Preferably, the balance of (A) is introduced independently or as a mixture with (C) and (D). By the term "balance" is understood the remaining amount of the total amount, of each individual component that was not introduced in step (1).

Another variant of the process is to introduce at least a fraction of (B) (optionally with a fraction of (D)) in step (1) and the balance of (B) as a mixture with the balance of C) and (D) in step (2).

Advantageously, step (2) is continued until the epoxy-containing monomer and optionally the other comonomer(s) have reacted until reaching the desired degree of conversion. Preferably, step (2) is performed until the degree of conversion of the epoxy-containing monomer and optionally of the comonomer(s) is at least 85 %, preferably at least 90 % and at most or equal to 100 %.

The pH is advantageously equal to or below 8, preferably equal to or below 7.5.

The pH in step (2) is advantageously in the range 3 to 8, more advantageously 5 to 7.5, most advantageously 6.5 to 7.5.

The pH value is advantageously adjusted to the desired value by means of any suitable base which is soluble in water. Mention can be made of phosphates or carbonates of alkaline or alkaline earth metals. Non-limiting examples of suitable bases are trisodium phosphate, tetrasodium pyrophosphate, sodium hydrogen carbonate, calcium carbonate.

According to step (3) of the process for preparing an epoxy-containing polymer seed latex according to the invention, an epoxy-containing polymer seed latex is obtained. The process for preparing an epoxy-containing polymer seed latex according to the invention can be advantageously an *ex situ* process, that is to say a process at the end of which the seed latex is isolated, or an *in situ* process according to which the seed latex is synthesized in the reactor where it is then used for a subsequent polymerization. Preferably, the process according to the invention is an *ex situ* process.

Advantageously, the pH of the reaction in step (2) is maintained in step (3).

The seed latex may or may not then be subjected to stripping of the residual monomers before its subsequent use. In the case where stripping is carried out, it may be by stripping under vacuum or else by stripping under vacuum and simultaneously injecting steam into the latex. Preferably, when it is carried out, it is by stripping under vacuum.

Another aspect of the present invention relates to an epoxy-containing polymer seed latex.

The epoxy-containing polymer in said latex is characterized by a percentage of intact epoxy groups of at least 50%, still of at least 60%, preferably of at least 80%, more preferably of at least 85%, even more preferably of at least 90%.

The expression "percentage of intact epoxy groups" is used herein to indicate the percentage of epoxy groups preserved from hydrolysis during the polymerization process as obtained by comparing the experimental and theoretical epoxy content.

Typically the particles of said epoxy-containing polymer latex have an average particle size, measured by dynamic light scattering, less than or equal to 90 nm.

Preferably, the particles of the epoxy-containing polymer seed latex have an average particle size, measured by dynamic light scattering, of less than or equal to 80 nm, more preferably less than or equal to 75 nm. Their average particle size is advantageously more than or equal to 30 nm, preferably more than or equal to 35 nm, more preferably more than or equal to 40 nm. Their average particle size is advantageously between 30 nm and 90 nm, preferably between 35 and 75 nm.

What is understood by average particle size, as determined by dynamic light scattering, is defined in the experimental section.

The said epoxy-containing polymer seed latex is advantageously prepared according to the process of the present invention as previously described. Accordingly, the definitions and preferences defined previously within the context of the process for preparing an epoxy-containing polymer latex apply to the epoxy-containing polymer latex according to the invention.

In another aspect, the present invention relates to a process for preparing a vinylidene chloride polymer latex by radical polymerization in aqueous emulsion of vinylidene chloride and optionally at least one comonomer characterized in that the polymerization takes place in the presence of an epoxy-containing polymer seed latex as defined above and wherein said process is carried out at a pH between 3 and 7.

In this aspect of the present invention, the definitions and preferences defined previously within the context of the process for preparing an epoxy-containing polymer seed latex apply to the process for preparing a vinylidene chloride polymer latex according to the invention.

The vinylidene chloride polymer latex is advantageously characterized by a solids concentration of around at least 40 % by weight, preferably at least 45 % by weight, more preferably at least 50 % by weight. The vinylidene chloride polymer latex is advantageously characterized by a solids concentration of around at most 75 % by weight, preferably around at most 70 % by weight, more around at most 65 % by weight, most around at most 60 % by weight.

The individual polymer particles in the vinylidene chloride polymer latex advantageously have average particle size, as measured by dynamic light scattering, of at least 90 nm, preferably at least 100 nm, and more preferably at least 110 nm. They advantageously have an average particle size of at most 300 nm, preferably at most 200 nm, more preferably at most 150 nm. The average particle size of the particle has any values within these ranges (+/- the standard deviation in nanometer, at most +/- 1 nm).

What is understood by average particle size, as determined by dynamic light scattering, is defined in the experimental section.

Vinylidene chloride is the main monomer used in the process according to the invention.

The expression "main monomer" is understood to denote the monomer present in an amount of at least 100/n wt % of the monomer blend and which will create at least 100/n wt % of the monomer units of the polymer obtained, n being the number of monomers in the monomer blend.

The expression "vinylidene chloride polymers" is understood to mean vinylidene chloride copolymers.

The expression "vinylidene chloride copolymers" is understood to mean copolymers of vinylidene chloride, which is the main monomer, with one or more monomers (called "comonomers") with which it is copolymerizable.

Among the monomers that are copolymerizable with vinylidene chloride, mention may be made, of vinyl chloride, vinyl esters such as for example vinyl acetate, vinyl ethers, acrylic acids, esters and amides, methacrylic acids, esters and amides, acrylonitrile, methacrylonitrile, styrene, styrene derivatives, butadiene, olefins such as for example ethylene and propylene, itaconic acid and maleic anhydride, but also copolymerizable emulifiers such as 2-acrylamido-2-methylpropanesulphonic acid (AMPS) or one of its salts, for example the sodium salt, 2-sulphoethylmethacrylic acid (2-SEM) or one of its salts, for example the sodium salt, and the phosphate ester of methacrylate-terminated polypropylene glycol (such as the product SIPOMER PAM-200 from Rhodia) or one of its salts, for example the sodium salt.

Preferred vinylidene chloride copolymers are those containing vinylidene chloride as a main monomer, such as in an amount of at least 50 wt % and, as copolymerizable monomers, vinyl chloride and/or at least one monomer chosen from maleic anhydride, itaconic acid, and the (meth)acrylic monomers corresponding to the general formula (II):

$$CH_2 = CR_8R_9 \qquad (II)$$

in which $R_8$ is chosen from hydrogen and the methyl group and $R_9$ is chosen from the -CN group and the -CO-$R_{10}$ group in which $R_{10}$ is chosen from the -OH group, the -O-$R_{11}$ groups with $R_{11}$ chosen from the linear or branched alkyl groups containing from 1 to 18 carbon atoms optionally bearing one or more -OH groups, the epoxyalkyl groups containing from 2 to 10 carbon atoms and the alkoxyalkyl groups containing a total of 2 to 10 carbon atoms and finally $R_{10}$ is also chosen from the -$NR_{12}R_{13}$ radicals in which $R_{12}$ and $R_{13}$, which are the same or different, are chosen from hydrogen and the alkyl groups containing from 1 to 10 carbon atoms, optionally bearing one or more -OH groups, the aforementioned copolymerizable surfactants and the phosphate ester of methacrylate-terminated polypropylene glycol or one of its salts, for example the sodium salt.

More particularly preferred vinylidene chloride copolymers are those containing, as copolymerizable monomers, vinyl chloride and/or at least one monomer chosen from maleic anhydride, itaconic acid, the (meth)acrylic monomers that are methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, N-methylolacrylamide, 2-acrylamido-2-methylpropanesulphonic acid (AMPS) or one of its salts, for example the sodium salt, 2-sulphoethylmethacrylic acid (2-SEM) or one of its salts, for example the sodium salt, and the phosphate ester of methacrylate-terminated polypropylene glycol or one of its salts, for example the sodium salt.

Most particularly preferred vinylidene chloride copolymers are those containing, as copolymerizable monomers, at least one monomer chosen from maleic anhydride, itaconic acid, the (meth)acrylic monomers that are methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, N-methylolacrylamide, 2-acrylamido-2-methylpropanesulphonic acid (AMPS) or one of its salts, for example the sodium salt, 2-sulphoethylmethacrylic acid (2-SEM) or one of its salts, for example the sodium salt, and the phosphate ester of methacrylate-terminated polypropylene glycol or one of its salts, for example the sodium salt.

Advantageously, the vinylidene chloride copolymers are those containing methyl acrylate.

Typically, the amount of vinylidene chloride in the vinylidene chloride copolymers varies from 50 to 95 % by weight, preferably from 60 to 95 % by weight and particularly preferably from 70 to 95 % by weight.

Advantageously, the amount of vinyl chloride in the vinylidene chloride copolymers varies from 0.5 to 50 % by weight, preferably from 0.5 to 40 % by weight and particularly preferably from 0.5 to 30 % by weight.

Advantageously, the amount of itaconic acid and/or (meth)acrylic monomer(s) in the vinylidene chloride copolymer varies from 1 to 50 % by weight, preferably from 2 to 40 % by weight and particularly preferably from 2 to 30 % by weight.

According to the process for preparing a vinylidene chloride polymer latex according to the invention, the polymerization takes place in the presence of a seed latex of an epoxy-containing polymer obtained by the process according to the invention.

The expression "in the presence" is understood to mean that the seed latex is in the polymerization medium when this polymerization takes place. Although it is not excluded that a small amount of the seed latex may be added at a later time, it is preferred that all of the seed latex is present when the contents of the reactor are reacted. Particularly preferably, all of the seed latex is introduced at the start and is therefore present when the contents of the reactor are reacted.

The expression "at the start" is understood to mean with the initial charge. The expression "at a later time" is understood to mean that the introduction begins after the initial charge has been introduced and the polymerization reaction initiated.

The process for preparing a vinylidene polymer latex according to the invention advantageously uses at least one radical generator and at least one emulsifier.

The expression "at least one radical generator" is understood to mean that the process for preparing a vinylidene chloride polymer latex may use one or more radical generators.

In the remainder of the text, the expression "radical generator" used in the singular or plural should be understood as denoting one or more radical generators, except where denoted otherwise.

The radical generators are advantageously water-soluble. They are advantageously chosen from water-soluble diazo compounds, water-soluble peroxides and redox systems combining a water-soluble peroxide and a reducing agent.

As examples of water-soluble diazo compounds, mention may be made of those which were mentioned previously for the process for preparing a seed latex according to the invention.

4,4'-azobis(4-cyanovaleric acid), ammonium 4,4'-azobis(4-cyanovalerate), sodium 4,4'-azobis(4-cyanovalerate) and potassium 4,4'-azobis(4-cyanovalerate) are preferred.

As examples of water-soluble peroxides, mention may be made of those which were mentioned previously for the process for preparing a seed latex according to the invention.

The water-soluble peroxides are preferred. Among these, alkali metal persulfates such as sodium persulfate and potassium persulfate, ammonium persulfate and also hydrogen peroxide are particularly preferred. Alkali metal persulfates and ammonium persulfate are more particularly preferred.

As examples of water-soluble diazo compounds, water-soluble peroxides and reducing agent, mention may be made of those which were mentioned previously for the process for preparing a epoxy-containing polymer latex according to the invention.

As examples of water-soluble peroxides that make up the redox system, mention may be made of the aforementioned water-soluble peroxides. As reducing agents that make up the redox system, mention may be made of alkali metal sulfites, alkali metal metabisulfites and ascorbic acid. Preferred redox systems are the alkali metal or ammonium persulfate/alkali metal sulfite, alkali metal or ammonium persulfate/alkali metal metabisulfite, alkali metal or ammonium persulfate/ascorbic acid, hydrogen peroxide/ascorbic acid, hydrogen peroxide/ferrous sulfate and *t*-butyl hydroperoxide/sulfoxylate systems. Sodium sulfite and sodium metabisulfite are particularly preferred among the alkali metal sulfites and metabisulfites respectively.

Particularly preferably, the process for preparing a vinylidene chloride polymer latex according to the invention uses a water-soluble radical generator chosen from alkali metal persulfates, ammonium persulfate, hydrogen peroxide and alkali metal or ammonium persulfate/sodium sulfite, alkali metal or ammonium persulfate/sodium metabisulfite, alkali metal or ammonium persulfate/ascorbic acid and hydrogen peroxide/ascorbic acid redox systems.

An oil-soluble radical generator (soluble in the monomer(s)) may optionally be added, moreover, at the end of the polymerization.

One fraction of the radical generator(s) is preferably introduced at the start and another fraction at a later time.

When the introduction takes place at a later time, it may be carried out continuously or as a single injection. What is understood by continuous introduction is defined above for the process for preparing an epoxy-containing polymer seed latex.

The expression "at least one emulsifier" is understood to mean that the process for preparing a vinylidene chloride polymer latex may use one or more emulsifiers.

In the remainder of the text, the expression "emulsifier" used in the singular or plural should be understood as denoting one or more emulsifiers, except where denoted otherwise.

The emulsifiers may be anionic emulsifiers, non-ionic emulsifiers or cationic emulsifiers, as defined previously for the process for preparing a epoxy-containing polymer seed latex according to the invention.

The emulsifiers are preferably anionic emulsifiers, optionally as a mixture with one or more non-ionic emulsifiers. Anionic emulsifiers are particularly preferred.

One fraction of the emulsifier (s) is preferably introduced at the start and another fraction at a later time. When the introduction takes place at a later time, it is preferably carried out continuously.

According to the process for preparing a vinylidene chloride polymer latex according to the invention, the monomers may be introduced into the polymerization medium in several different ways and in a different form.

Thus, according to a first variant, some monomers are introduced at the start of the process in one batch and the others at a later time, either in one batch, or continuously.

According to a second variant, all the monomers are introduced at the start of the process in one batch.

According to a third variant, all the monomers are introduced continuously, at a later time.

According to a fourth variant, one fraction of all of the monomers is introduced at the start of the process and the balance is introduced at a later time, either in one batch, or continuously.

The monomers may be introduced individually (in the pure state or in the form of an emulsion) or after having been blended (the blend being introduced as is or in the form of an emulsion).

After reacting the contents of the reactor, using similar means to those mentioned for the process for preparing an epoxy-containing polymer seed latex, preferably by heating the contents of the reactor until the degree of conversion of the monomers is advantageously at least 82 % and preferably at most 100 %, a vinylidene chloride polymer latex is advantageously obtained.

The temperature at which the contents of the reactor are reacted is advantageously equal to at least 15°C, preferably equal to at least 20°C, more preferably equal to at least 30°C. In addition, it is advantageously equal to at most 100°C, preferably at most 90°C, more preferably at most 80°C. The temperature is advantageously between 15°C and 100°C, preferably between 30°C and 80°C.

The process for preparing the vinylidene chloride polymer latex is carried out at a pH between 3 and 7, such as any value within this range, such as about 3, about 4, about 5, about 6, about 7 (the word "about" is in this context to be understood as +/- 0.5 pH unit). The pH is advantageously equal to or below 7, more advantageously equal to or below 6.5. The pH is advantageously equal to or above 3, more advantageously equal to or above 4.

The pH can be adjusted by any known means. Advantageously, the pH is adjusted by addition of at least one water soluble base. Non limiting examples of suitable bases are for instance trisodium pyrophosphate, tetrasodium pyrophosphate and calcium carbonate. Preferably, the base is the tetrasodium pyrophosphate.

The latex obtained is then advantageously subjected to stripping of the residual monomers before its subsequent use. Stripping may be carried out by stripping under vacuum or else by stripping under vacuum and simultaneously injecting steam into the latex. Preferably, stripping is carried out by stripping under vacuum and simultaneously injecting steam into the latex.

An alternative embodiment of the process for preparing the vinylidene chloride polymer latex of the present invention comprises mixing the epoxy-containing polymer seed latex obtained according to the present invention with a vinylidene chloride polymer latex obtained separately by radical polymerization in aqueous emulsion.

In this alternative embodiment of the invention, the definitions and preferences defined previously within the context of the process for preparing an epoxy-containing polymer seed latex and of the process for preparing a vinylidene chloride polymer latex by radical polymerization apply to this process for preparing a vinylidene chloride polymer latex.

The amount of dry matter of the epoxy-containing polymer seed latex used in the process for preparing a vinylidene chloride polymer latex either by radical polymerization in aqueous emulsion or by mixing, is advantageously at least 1% by weight, relative to the total weight of the vinylidene chloride polymer.

This amount of dry matter of the epoxy-containing polymer seed latex, expressed relative to the total weight of the vinylidene chloride polymer latex, is advantageously at most 10 %, preferably at most 8.5 % and more preferably at most 5 % by weight.

In another aspect, the present invention relates to a vinylidene chloride polymer latex comprising an epoxy-containing polymer comprising an epoxy-containing monomer and optionally at least one comonomer selected from the group consisting of vinyl chloride, vinylidene chloride, styrenic monomers, allylic monomers, vinyl acetate and/or (meth)acrylic monomers corresponding to the general formula (I): $CH_2=CR_1R_2$ as above defined and a vinylidene chloride polymer.

The definitions and preferences defined previously within the context of the process for preparing an epoxy-containing polymer seed latex and of the process for preparing a vinylidene chloride polymer latex by radical polymerization apply to the vinylidene chloride polymer latex.

Advantageously the epoxy-containing polymer in said vinylidene chloride polymer latex is characterized by a percentage of intact epoxy groups of at least 50%, more advantageously of at least 60%. Preferably, the epoxy-containing polymer in said vinylidene chloride polymer latex is characterized by a percentage of intact epoxy groups of at least 80%.

Typically the latex comprises water as the polymer(s) dispersing medium.

Typically the amount of dry matter of the epoxy-containing polymer in the vinylidene chloride polymer latex is at least 1% by weight and at most 10% by weight relative to the total weight of the vinylidene chloride polymer, preferably at most 8.5% and more preferably at most 5% by weight.

The vinylidene chloride polymer latex is advantageously prepared according to one of the processes of the present invention for the preparation of a vinylidene chloride polymer latex as previously described.

In a first embodiment said latex comprises particles of said epoxy-containing polymer which are at least partially covered by a shell of a vinylidene chloride polymer. Said particles are preferably dispersed in water.

Said latex may advantageously be prepared by radical polymerization of vinylidene chloride and optionally at least one other monomer in the presence of an epoxy-containing polymer seed latex.

In said first embodiment the vinylidene chloride latex is characterized by a structure of core/shell, wherein the shell is at least partially capping the core. A core/shell particle comprises a core component and a shell component which differ in their chemical composition. The core/shell particles of the present invention have a core made of an epoxy-containing polymer and a shell made of a vinylidene chloride polymer. The shell is at least partially capping the core. The expression "capping the core" is to be understood as creating an "envelop" of the core. The expression "at least partially capping the core", is to be understood that the shell may entirely cover the core, homogenously or unhomogeneously, or that the shell may cover only part of the core. In the context of the invention, the vinylidene chloride polymer latex particles may have more than one core. The term core/shell particles may include, without being limited to, several structures. Thus, the core/shell particles may consist of one or several cores at least partially capped by a shell layer forming basically the outer wall of the particles. Between the core and the shell there may be intermediate layers separating core and shell from direct contact but overall the shell envelops the core part at least partially including the intermediate layer. Such intermediate layer may form an interphase between the core and the shell and can be of any composition. Preferably this intermediate layer, if present, may have an intermediate composition (intermediate between the core and the shell in composition) and can be uniform throughout the interphase or may form a composition gradient gradually changing from the composition of the core to the composition of the shell. Preferably, in the present invention, the core is partially covered by the shell.

The structure of the vinylidene chloride polymer latex as core-shell particles can be determined by suitable techniques, such as by Transmission Electron Microscopy (TEM).

The average particle size of the particles of the vinylidene chloride polymer latex, as measured by dynamic light scattering, is advantageously between 90 nm and 300 nm, preferably between 100 nm and 250 nm, more preferably between 110 nm and 200 nm, more preferably between 110 nm and 150 nm. The average particle size of the particle has any values within these ranges. The nanoscale size of the epoxy-containing polymer seed latex furthermore makes it possible to control the particle size of particles of a vinylidene chloride polymer latex.

What is understood by average particle size, as determined by dynamic light scattering, is defined in the experimental section.

In a second embodiment the vinylidene chloride latex comprises particles of the epoxy-containing polymer and particles of the vinylidene chloride polymer.

The vinylidene chloride polymer latex of this second embodiment may advantageously be prepared by mixing an epoxy-containing polymer seed latex with a vinylidene chloride polymer latex obtained separately.

The processes of the invention make it possible to obtain vinylidene chloride polymer latexes which are characterized by a better thermal stability than other latexes.

Furthermore, the processes make it possible to obtain a latex of a vinylidene chloride polymer which may give rise to the formation of high-quality films, having the barrier properties, in particular oxygen permeability and water vapour permeability, required for the intended applications.

Accordingly further objects of the present invention are the use of the vinylidene chloride polymer latexes of the invention for the preparation of films, as well as the films comprising a vinylidene chloride polymer and an epoxy-containing polymer as above defined.

The following examples and the figure are intended to illustrate the invention without however limiting the scope thereof.

Materials

Glycidyl methacrylate (GMA, Aldrich, 97 %), n-butyl methacrylate (BMA, Acros, 99 %), vinylidene chloride (VDC or VC$_2$, Aldrich, 99 %) and methyl acrylate (MA, Aldrich, 99 %) were distilled under reduced pressure to remove inhibitors. Potassium persulfate (KPS, Aldrich, 99 %), sodium metabisulfite (Na$_2$S$_2$O$_5$, Aldrich, 99 %), sodium hydrogen carbonate (NaHCO$_3$, Aldrich,), tetrasodium pyrophosphate (TSPP, Alfa Aesar, 98 %), Dowfax 2A1 (Dow, solution of 42 wt % in water) were used as received. Water was deionized through an ion-exchange resin (conductivity below 1μS/cm).

Characterization

*Monomer Conversion measurements*

The monomer conversions were determined by gravimetry. A sample of few grams of latex was added to a pre-weighted aluminum cup containing a small crystal of hydroquinone. The cup was covered by an aluminum paper pierced in several points to allow volatile products to escape the cup and then placed into an oven at 60 °C under reduced pressure and leave to dry overnight. The mass of the residue was noted once all volatile products vaporized. The conversion was then calculated via the equation:

$$Conversion(\%) = \frac{E_{Sf} - E_{S0}}{E_{Stheo} - E_{S0}} \times 100$$

Where:

$$E_{Sf} = \frac{m_{residue}}{m_{latex}}$$

$$E_{S0} = \frac{\text{mass of non volatile reactants (solvent + monomer excluded)}}{\text{total mass}}$$

$$E_{Sth\acute{e}o} = \frac{\text{mass of non volatile reactants (solvent excluded)}}{\text{total mass}}$$

*Molecular mass measurements*

Molecular masses of copolymers were determined by Gel Permeation Chromatography (PL-GPC 50 from Varian). Freeze-dried samples were dissolved in THF and filtered on 0.2$\mu$m filters, before being injected in the apparatus.
A calibration based on Polystyrene standards (K = 14.1 x $10^{-5}$ dL/g and $\alpha$= 0.7 at 25 °C in THF) was employed on order to calculate the molar masses from times of elution measured by the instrument. Mark-Houwink parameters of poly(VDC-co-MA) (80:20 mass ratio) determined by Revillon (J.Polym. Sci : Part A - Polym. Chem. 1976, 14, 2263) (K = 35.1 x $10^{-5}$ dL/g and $\alpha$= 0.57 at 25 °C in THF) were employed to exploit the universal calibration curve.

*Particle size measurements*

The particle sizes distributions of the latexes were determined by dynamic light scattering (DLS) with a Nanotrac particle size analyzer (Microtrac Inc.).
Particles dispersed in a fluid undergo random collisions with the thermally excited molecules of the fluid resulting in Brownian motion. The average velocity of a large number of mono-sized particles over a long period approaches a functional form that is related to the particle size distribution. The Nanotrac measurement technique is that of dynamic light scattering. Samples withdrawn from poly(glycidyl methacrylate-butyl methacrylate (poly(GMA-co- BMA)) latexes for DLS experiments were diluted approximately 10 times in deionised water in order to avoid interferences between the particles that may happen at high concentrations. For the same reason, samples taken from poly(GMA-co-BMA)/poly(vinylidene chloride-*co*-methyl acrylate) (poly(VDC-*co*-MA)) composite latexes were diluted about 1000 times.
The "mean diameter of the intensity distribution (MI)" as provided by the Nanotrac particle size analyzer is reported as the average size of the particles in the latexes.

*Gel content*

The percentage of gel present in the poly(GMA-*co*-BMA) copolymers was determined by extraction of the soluble part with dichloromethane. A sample of dry polymer ($W_{polymer}$) was weighted in a cellulose extraction thimble (Whatman) of known mass, placed in a soxhlet and extracted with dichloromethane at reflux for 72h. At the end of the extraction, the undissolved part of the polymer remaining in the thimble was dried and weighted ($W_{undissolved\ part}$). The gel content was then calculated via the formula:

$$gel\ content\ (\%) = w_{undissolved\ part} \times 100 / w_{polymer}$$

*Polymer drying*

The dried polymer latexes used in the Examples were freeze-dried according to the following procedure.
Samples of latexes were poured into plastic hemolysis tubes and dipped into liquid nitrogen for 5 minutes. Once the latex was frozen, the tubes were closed with thin paper sheets and tape to enable water escaping the tube during the freeze-drying process. Frozen tubes were then placed in a 500mL round-bottom flask and connected to a freeze-dryer. The conditions employed for the freeze-drying process were a temperature of -80°C and a pressure of 0.10 to 0.20 mbar

*Structure of poly(GMA-co-BMA)/poly(VDC-co-MA) composite latexes-Transition Electron Microscopy (TEM)*

Composite latexes were diluted as follows: 2 droplets in 100 mL of water. The solution was deposited on a copper grid covered by a layer of FORMAR (polyvinyl formal), then dried at room temperature and under air atmosphere.

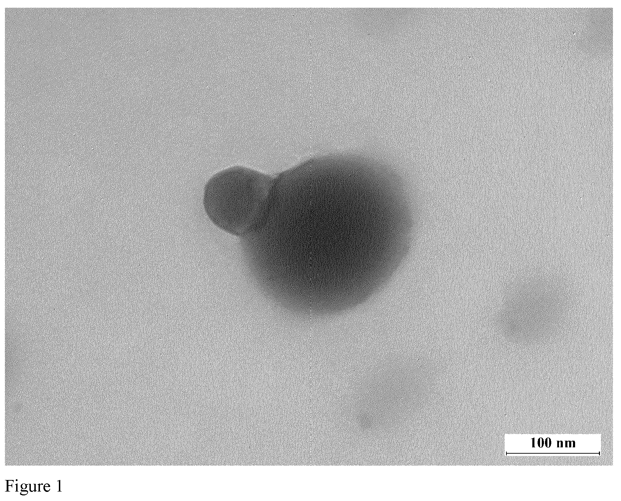

Figure 1 was obtained using a Zeiss EM910 (80kV) microscope.

*Titration of epoxy groups*

The determination of the epoxy content in a polymer is based on the ring-opening of epoxy groups by HBr, generated in situ by a reaction between tetraethylammonium bromide and perchloric acid. A known mass of dry polymer (typically 0.1g for the seed polymer and 1 g for PVDC composite samples) was placed in a beaker and dissolved in 60 mL of dioxane for 5 minutes at 80°C, before adding 60 mL of acetic acid. Once the beaker was back to room temperature, 10 mL of a 0.1N solution of tetraethylammonium bromide in acetic acid was added. The titration by a 0. IN perchloric acid solution in acetic acid was followed by pH-metry. By comparing the experimental and theoretical epoxy contents, the percentage of epoxy groups preserved from hydrolysis during the polymerization could be determined.

*Thermal stability measurements*

The thermal degradation of PVDC powders (obtained by freeze-drying of the composite latexes) was analyzed by thermogravimetric analysis (TGA) carried out on a TGA apparatus Q50 (TA Instruments). Analyses consisted of isothermal experiments performed for 120min at 160°C under air atmosphere.

The thermal stability of the polymer latexes of the present invention was evaluated by two measurements: 1) time (minute) until which the weight loss was measured to remain below 0.3 % and 2) the remaining material (in % of the initial polymer weight) after an exposure of 120 minutes at 160°C.

Example 1 (according to the present invention): seed latexes of glycidyl methracrylate-*co*-butyl methacrylate

*General procedure (samples 1A to IE):*

Emulsion copolymerization of glycidyl methacrylate and butyl methacrylate was carried out in a 250 mL double-walled glass vessel, equipped with a mechanical glass anchor propeller. An aqueous solution of sodium metabisulfite, Dowfax 2A1 and sodium hydrogenocarbonate was charged in the reactor, heated up at 30°C and stirred at a speed of 200 rpm. At the beginning of the reaction, 9 mL of a 10 g/L aqueous solution of KPS was injected at once in the reactor followed by a continuous addition of this solution at a rate of 4.5 mL/h for 4h. At the same time a continuous feed of the monomer solution (90 wt % of GMA, 10 wt % of BMA) was started and maintained for 3h. Continuous additions were performed with two Perfusor Compact syringe pumps (Braun). The reaction lasted for 5h in total.

*Reparation of samples 1F and 1G*

The general procedure was followed with the following modifications:

- 1F: no sodium metabisulfite and no sodium hydrogenocarbonate added to reaction mixture, polymerization process temperature = 60°C
- 1G: no sodium hydrogenocarbonate added to reaction mixture.

Process parameters and properties of the seven different poly(GMA-co-BMA) seed latexes (designated by Examples 1A, 1B, 1C, 1D, IE, 1F and 1G) prepared as described above are reported in Table 1.

Table 1

| Examples | 1A | 1B | 1C | 1D | IE | 1F | 1G |
|---|---|---|---|---|---|---|---|
| $Na_2S_2O_5$ (g) | 0.24 | 0.26 | 0.26 | 0.25 | 0.25 | 0 | 0.25 |
| $NaHCO_3$ (g) | 0.09 | 0.1 | 0.11 | 0.09 | 0.10 | 0 | 0 |
| Dowfax 2A1 (g) *(42wt% aqueous solution)* | 8.00 | 10.09 | 8.01 | 8.09 | 8.04 | 8.04 | 8.01 |
| Water (g) | 72.83 | 73.00 | 73.29 | 72.81 | 73.23 | 73.70 | 73.52 |
| Initiator feed (10g/L solution) *Shot of 9 mL at initial time, then feed rate of 4.5 mL/h for 4 hours* <br> KPS (g) <br> Water (g) | 0.27 <br> 27 | 0.27 <br> 27 | 0.27 <br> 27 | 0.27 <br> 27 | 0.27 <br> 27 | 0.27 <br> 27 | 0.27 <br> 27 |
| Monomer feed <br> GMA/BMA (g/g) <br> Feed rate (g/h) | 27.71/3.10 <br> 10.3 | 27.74/3.08 <br> 10.3 | 30.50/3.40 <br> 11.3 | 27.73/3.09 <br> 10.3 | 36.03/4.03 <br> 13.4 | 27.82/3.08 <br> 10.3 | 27.85/3.06 <br> 10.3 |
| pH | 7.3 | 7.5 | 7.4 | 7.1 | 7.5 | 6.3 | 3.4 |
| Particle diameter (nm) | 42.9 | 43.0 | 50.6 | 50.0 | 70.2 | 36.4 | 33.3 |
| Standard deviation (nm) | 0.0133 | 0.0170 | 0.0131 | 0.0130 | N/A | 0.0112 | 0.0109 |
| Solid concentration (wt %) | 22.1 | 22.0 | 23.7 | 22.0 | 26.9 | 24.0 | 24.0 |
| Polymer gel content (%) | 99.2 | 99.0 | N/A | 100.0 | 100.0 | 99.0 | 98.5 |
| % of intact epoxy groups (+/- 5 %) | 98.3 | 100.0 | N/A | 100.0 | 100.0 | 90.2 | 87.9 |
| Temperature | 30°C | 30°C | 30°C | 30°C | 30°C | 60°C | 30°C |
| N/A : not determined | | | | | | | |

Example 2 (according to the present invention): poly(glycidyl methracrylate-*co*-butyl methacrylate)/poly(vinylidene chloride-*co*-methyl acrylate) composite latexes containing 2.5 %, 1.7 %, 1.5 % and 1.0 % by weight of seed latex prepared in Example 1, relative to the weight of the poly(vinylidene chloride-co-methyl acrylate)

Seeded emulsion copolymerization of vinylidene chloride and methyl acrylate was performed in a 300 mL stainless steel reactor (Parr Instrument Company), equipped with a stainless steel 4-bladed mechanical stirrer and internal pressure and temperature sensors. Oxygen was removed from the autoclave by purging it via three cycles of vacuum ($10^{-2}$ mbar) broken with nitrogen. Vacuum was restored in the reactor before charging an aqueous solution containing the poly(GMA-*co*-BMA) seed latex obtained in Example 1 and sodium metabisulfite. A 4 bars nitrogen overpressure was then established in the vessel. The speed of agitation was set at 250 rpm and the temperature was raised to 55°C. A stirred pre-emulsion containing tetrasodium pyrophosphate, KPS, Dowfax 2A1, VDC and MA, was then continuously pumped into the reactor at a rate of 24 mL/h for 5h via a Series III digital HPLC pump (LabAlliance). The overall reaction lasted for 6h. Residual monomer was stripped by heating up the latex for 1h at 60°C under reduced pressure (0.2-0.4 bar). Table 2 presents the preparation of poly(GMA-co-BMA)/poly(VDC-co-MA) composite latexes with the poly(GMA-*co*-BMA) seed latexes prepared in Example 1.

Table 2

| PVDC latex | 2A | 2B | 2C | 2D |
|---|---|---|---|---|
| % seed relative to polymer | 2.5 % | 1.7 % | 1.5 % | 1.0 |
| Seed used | 1C | 1A | 1A | 1B |
| Seed mass (g) | 9.94 | 6.60 | 6.64 | 4.18 |
| $Na_2S_2O_5$ (g) | 0.20 | 0.23 | 0.22 | 0.20 |
| $NaHCO_3$ (g) | 0.11 | 0.12 | 0.09 | 0 |
| Water (g) | 31.96 | 32.22 | 32.07 | 27.97 |
| TSPP (g) | 0.37 | 0.35 | 0.39 | 0.39 |
| Dowfax 2A1 (g) | 3.77 | 3.34 | 2.86 | 3.31 |
| KPS (g) | 0.35 | 0.39 | 0.33 | 0.33 |
| Water (g) | 58.07 | 65.35 | 58.03 | 62.75 |
| VDC/MA (g) | 85.46/9.65 | 82.15/9.00 | 85.15/9.40 | 84.07/9.32 |
| Monomer conversion % | 95.5 | 94.6 | 91.9 | 95.9 |
| pH | 5.8 | 5.4 | 5.6 | 6.2 |

The structure of the above mentioned composite latexes is illustrated in Figure 1. The structure can be designated as a snowman-like structure wherein the PVDC shell is only partially encapsulating the core of GMA-BMA polymer.

Example 3 (comparative) : Preparation of poly(glycidyl methracrylate-*co*-butyl methacrylate)/poly(vinylidene chloride-*co*-methyl acrylate) composite latexes containing 2.5 %, 1.7 % and 1.0 % by weight of seed latex prepared in Example 1, relative to the weight of poly(vinylidene chloride-*co*-methyl acrylate) at a pH < 3.

The same procedure of Example 2 (see Table 3), was carried out using the latex seeds obtained in Example 1, however, no tetrasodium pyrophosphate (TSPP) base was used to regulate the pH.

Table 3

| PVDC latex | 3A | 3B | 3C |
|---|---|---|---|
| % seed relative to polymer | 2.5 % | 2.0 % | 1.0 % |
| Seed used | IE | 1D | 1B |
| Seed mass (g) | 10.34 | 8.48 | 4.19 |
| $NaHCO_3$ (g) | 0 | 0 | 0 |
| $Na_2S_2O_5$ (g) | 0.21 | 0.19 | 0.18 |
| Water (g) | 32.09 | 29.82 | 28.00 |
| TSPP (g) | 0 | 0 | 0 |

(continued)

| PVDC latex | 3A | 3B | 3C |
|---|---|---|---|
| Dowfax 2A1 (g) | 3.33 | 3.37 | 3.31 |
| KPS (g) | 0.34 | 0.34 | 0.33 |
| Water (g) | 57.53 | 57.88 | 62.91 |
| VDC/MA (g) | 86.06/9.43 | 84.91/9.82 | 84.31/9.31 |
| Monomer conversion % | 99.2 | 97.7 | 98.2 |
| pH | 2.5 | 2.2 | 2.1 |

Example 4 (comparative): preparation of poly(vinylidene chloride-co-methyl acrylate) latexes without the use of the seed latex prepared in Example 1.

*General procedure*

In 6 separate containers were prepared the following solutions:

- an aqueous solution containing the reducing agent
- an aqueous solution of KPS (10 g/L)
- an aqueous solution of KPS (30 g/L)
- an aqueous solution containing the surfactant and tetrasodium pyrophosphate (TSPP)
- a solution of vinylidene chloride and methyl acrylate
- deionised water

The preparation of poly(VDC-*co*-MA) was performed in a stainless steel reactor (Parr Instrument Company), equipped with a stainless steel 4-bladed mechanical stirrer and internal pressure and temperature sensors. Oxygen was removed from the autoclave by purging it via three cycles of vacuum ($10^{-2}$ mbar) broken with nitrogen. Vacuum was restored in the reactor before charging.

The solution containing the reducing agent was introduced into the reactor (also designated as autoclave) under a nitrogen atmosphere, under mechanical stirring. The temperature of the heating system was set to 55°C and the stirring speed at 250 rpm.

The vinylidene chloride and methyl acrylate comonomers were mixed with the aqueous solution of surfactant and TSPP in a round-bottom flask equipped with a septum and start stirring the resulting pre-emulsion.

Once the autoclave had reached the temperature of 55°C, the pre-emulsion was injected at a rate of 2.00 mL/min for 9 min, immediately followed by the addition of the 10g/L KPS solution at a rate of 2.00 mL/min for 5 min (initial volumes of pre-emulsion and KPS solution were respectively of 18 and 10 mL).

At this time 10mL of the 30g/L KPS solution were added to the pre-emulsion while keeping the reaction running for 30 minutes. The continuous pre-emulsion feed was maintained at a rate of 0.40 mL/min for 5 hours while checking the pressure every hour.

Finally, a KPS solution (5 g/L) was added to the reactor at a rate of 2.00 mL/min for 5 min and the reaction was maintained for one additional hour.

The reactor was cooled to room temperature and the latex was poured into a round-bottom flask, which was then plugged to vacuum (0.2 to 0.4 bar) while heating it at a temperature of 60°C for an hour in order to remove traces of vinylidene chloride and methyl acrylate.

Process parameters for the two different poly(VDC-*co*-MA) latexes (designated by Examples 4A and 4B) prepared as described above are reported in Table 4.

Table 4

|  | PVDC latex | 4A | 4B |
|---|---|---|---|
| Initial load | $Na_2S_2O_5$ (g) | 0.20 | 0.18 |
|  | Water (g) | 18.27 | 18.03 |
| Initial shot | TSPP (g) | 0.06 | 0.05 |
|  | Dowfax 2A1 (g) | 0.50 | 0.49 |
|  | KPS (g) | 0.12 | 0.12 |

(continued)

| | PVDC latex | 4A | 4B |
|---|---|---|---|
| | Water (g) | 21.50 | 21.41 |
| | VDC/MA (g) | 12.72/1.42 | 12.58/1.39 |
| Pre-emulsion feed | TSPP (g) | 0.31 | 0.31 |
| | Dowfax 2A1 (g) | 2.86 | 2.76 |
| | KPS (g) | 0.35 | 0.33 |
| | Water (g) | 53.81 | 54.43 |
| | VDC/MA (g) | 72.09/8.02 | 71.30/7.85 |
| | Monomer conversion % | 95.4 | 92.4 |
| | pH | 3.7 | 6.2 |

Example 5 (according to the invention) : preparation of polymer blends of the poly(GMA-*co*-BMA) seed latex prepared in Example 1 and the poly(VDC-co-MA) latex prepared in Example 4

Latex blends were prepared with a seed latex prepared in Example 1 and a polyvinylidene chloride latex of Example 4.

The blends of polymers were carried out by mixing poly(GMA-co-BMA) and poly(VDC-co-MA) latexes in the following proportions:

- 5A: 0.2629 g of latex seed prepared in Example 1C and 4.7682 g of reference PVDC latex prepared in Example 4A (for a 2.5wt % poly(GMA-co-BMA) content in the dry sample).
- 5B: 0.1584 g of latex seed prepared in Example 1A and 4.8402 g of reference PVDC latex prepared in Example 4A (for a 1.5 wt % poly(GMA-co-BMA) content in the dry sample)

The two blends of latexes were then subjected to freeze-drying.

Example 6: Physical properties of the latexes prepared in Examples 2 to 5.

Table 5 presents the data and properties of the vinylidene chloride polymer latexes, also designated as PVDC composite latexes, prepared in Examples 2 to 5.

Samples were analyzed by thermogravimetric analysis carried out at 160°C under air atmosphere. The time wherein the samples presented low degradation under these conditions (weight loss < 0.3 %) clearly showed that the presence of poly(GMA-co-BMA) seed particles provides PVDC composite latexes with higher thermal stability : the degradation is slower in the case of composite samples of Example 2 compared to the sample containing no poly(GMA-*co*-BMA) seed particles prepared in comparative Example 4. Composite latexes prepared in comparative Example 3, without using TSPP, presented therefore more degradation than the composite latexes prepared in Example 2.

Latex blends, prepared in Example 5, were subjected to freeze-drying and resulting powders were analyzed by thermogravimetry. The blends exhibited a slower degradation than the PVDC containing no seed latex, prepared in comparative Example 4 but showed a shorter time period within the weight loss of the material below 0.3 % than the samples from Example 2.

In conclusion, the thermogravimetric measurements of the samples prepared in Examples 2, 3, 4 and 5 showed that the vinylidene chloride latexes prepared according to the present invention (Examples 2 and 5) have a better thermal stability than the latexes prepared according to comparative Examples 3 and 4.

The films prepared with the PVDC latexes prepared according to the invention are characterized by an oxygen permeability required for the intended applications.

Table 5

| Examples | Seed average diameter (nm) | Seed % relative to the polymer | pH | Mn (g/mol) | Mw/Mn (g/mol) | % of intact epoxy group | PVDC latex average size (nm) | Thermal stability | |
|---|---|---|---|---|---|---|---|---|---|
| | | | | | | | | 1) time within weight loss <0.3 % at 160∘C (min) | 2) % of material after 120 min at 160∘C |
| 2A[a] | 50.6 | 2.5 % | 5.8 | 67300 | 2.72 | 88.7 | 127 | 40 | 97.27 % |
| 2B[a] | 43.0 | 1.7 % | 5.4 | 60300 | 2.58 | 86.5 | 120 | 35 | 97.16 % |
| 2C[a] | 43.0 | 1.7 % | 5.6 | N/A | N/A | N/A | 131 | 43 | 97.35 % |
| 2D[a] | 43.0 | 1.0 % | 6.2 | 61500 | 2.87 | 80.4 | 120 | 21 | 97.28 % |
| 3A[b] | 70.0 | 2.5 % | 2.5 | 10600 | 2.39 | 16.5 | 250 | 7 | 95.33 % |
| 3B[b] | 50.0 | 2.0 % | 2.2 | 9900 | 2.52 | 0 | 190 | 7 | 94.73 % |
| 3C[b] | 43.0 | 1.0 % | 2.1 | 12900 | 2.80 | 0 | N/A | 8 | 95.79 % |
| 4A[b] | - | 0.0 % | 3.4 | 50100 | 2.70 | N/A | 143 | 16 | 95.28 % |
| 5A[a] | 50.6 | 2.5 % | N/A | N/A | N/A | N/A | N/A | 35 | 96.95 % |
| 5B[a] | 43 | 1.5 % | N/A | N/A | N/A | N/A | N/A | 29 | 96.82 % |

a) Example according to the present invention
b) Comparative Example

N/A: not determined

## Claims

1. Process for preparing a seed latex of an epoxy-containing polymer **characterized in that** said seed latex is prepared by radical polymerization in aqueous emulsion of an epoxy-containing monomer and optionally at least one comonomer, **characterized in that** the following are used:

    (A) an epoxy-containing monomer and optionally at least one comonomer selected from the group consisting of vinyl chloride, vinylidene chloride, styrenic monomers, allylic monomers, vinyl acetate and/or (meth)acrylic monomers corresponding to the general formula (I): $CH_2=CR_1R_2$ in which $R_1$ is chosen from hydrogen and the methyl group and $R_2$ is chosen from the -CN group and the -CO-$R_3$ group in which $R_3$ is chosen from the -OH group, the -O-$R_4$ groups with $R_4$ chosen from the linear or branched alkyl groups containing from 2 to 18 carbon atoms optionally bearing one or more -OH group, the epoxyalkyl groups containing from 2 to 10 carbon atoms and the alkoxyalkyl groups containing a total of 2 to 10 carbon atoms and finally $R_3$ is also chosen from the -$NR_5R_6$ groups in which $R_5$ and $R_6$, which are the same or different, are chosen from hydrogen and the alkyl groups containing from 1 to 10 carbon atoms, optionally bearing one or more -OH groups;
    (B) at least one radical generator ;
    (C) at least one emulsifier ;
    (D) water,

    wherein said process comprises the steps of :

    (1) introducing optionally at least one fraction of (B), at least one fraction of (C), at least one fraction of (D), optionally at least one fraction of (A) into a reactor; then,
    (2) reacting the content of the reactor at a pH in the range 3 to 8, while continuously introducing therein the balance of (A), (B), (C) and (D) ; and
    (3) obtaining an epoxy-containing polymer seed latex.

2. Process according to claim 1, **characterized in that** the epoxy-containing monomer is chosen from the group of epoxy-alkylacrylates, epoxy-alkylmethacrylates, epoxy-alkyldiacrylates, epoxy-alkyldimethacrylates, epoxy-alkyltriacrylates, epoxy-alkyltrimethacrylates,epoxy-butenes, epoxy-alkylbutenes, epoxy-pentenes, epoxy-alkylpentenes, epoxy-hexenes, epoxy-alkylhexenes, epoxy-alkylstyrenes and allyl glycidyl monomers.

3. Process according to claim 1, **characterized in that** the epoxy-containing polymer is a copolymer of glycidylacrylate, methylglycidylacrylate, glycidylmethacrylate or methylglycidylmethacrylate.

4. Process according to any one of claims 1 to 3, **characterized in that** the temperature in step 2) is comprised between 15°C and 60°C.

5. Process for preparing a vinylidene chloride polymer latex by radical polymerization in aqueous emulsion of vinylidene chloride and optionally at least one comonomer **characterized in that** the polymerization takes place in the presence of an epoxy-containing polymer seed latex obtained by the process according to any one of claims 1 to 4 at a pH between 3 and 7.

6. Process for preparing a vinylidene chloride polymer latex by mixing the epoxy-containing polymer seed latex obtained by the process according to any one of claims 1 to 4, with a vinylidene chloride polymer latex obtained separately by radical polymerization in aqueous emulsion.

7. Process according to claim 5 or 6, **characterized in that** the amount of dry matter of epoxy-containing polymer seed latex is at least 1 % by weight relative to the total weight of the vinylidene chloride polymer.

8. A vinylidene chloride polymer latex comprising an epoxy-containing polymer and a vinylidene chloride polymer, wherein said epoxy-containing polymer comprises an epoxy-containing monomer and optionally at least one comonomer selected from the group consisting of vinyl chloride, vinylidene chloride, styrenic monomers, allylic monomers, vinyl acetate and/or (meth)acrylic monomers corresponding to the general formula (I):

$$CH_2=CR_1R_2 \qquad (I)$$

in which $R_1$ is chosen from hydrogen and the methyl group and $R_2$ is chosen from the -CN group and the -CO-$R_3$ group in which $R_3$ is chosen from the -OH group, the -O-$R_4$ groups with $R_4$ chosen from the linear or branched alkyl groups containing from 2 to 18 carbon atoms optionally bearing one or more -OH group, the epoxyalkyl groups containing from 2 to 10 carbon atoms and the alkoxyalkyl groups containing a total of 2 to 10 carbon atoms and finally $R_3$ is also chosen from the -NR$_5$R$_6$ groups in which $R_5$ and $R_6$, which are the same or different, are chosen from hydrogen and the alkyl groups containing from 1 to 10 carbon atoms, optionally bearing one or more -OH groups; and wherein said epoxy-containing polymer is **characterized by** a percentage of intact epoxy groups of at least 50%.

9. Vinylidene chloride polymer latex according to claim 8 which comprises particles of said epoxy-containing polymer which are at least partially covered by a shell of a vinylidene chloride polymer.

10. Vinylidene chloride polymer latex according to claim 8 which comprises particles of said epoxy-containing polymer and particles of said vinylidene chloride polymer.

11. Vinylidene chloride polymer latex according to any one of claims 8 to 10 wherein the amount of dry matter of epoxy-containing polymer is at least 1% by weight and at most 10% by weight relative to the total weight of the vinylidene chloride polymer.

12. Process according to any one of claims 5 to 7 or vinylidene chloride polymer latex of any one of claims 8 to 11, **characterized in that** the vinylidene chloride polymer is a copolymer containing vinylidene chloride in an amount of at least 50 wt % and, as copolymerizable monomers, vinyl chloride and/or at least one monomer chosen from maleic anhydride, itaconic acid, and the (meth)acrylic monomers corresponding to the general formula (II):

$$CH_2 = CR_8R_9 \qquad (II)$$

in which $R_8$ is chosen from hydrogen and the methyl group and $R_9$ is chosen from the -CN group and the -CO-$R_{10}$ group in which $R_{10}$ is chosen from the -OH group and the -O-$R_{11}$ groups with $R_{11}$ chosen from the linear or branched alkyl groups containing from 1 to 18 carbon atoms optionally bearing one or more -OH groups, the epoxyalkyl radicals containing from 2 to 10 carbon atoms and the alkoxyalkyl groups containing a total of 2 to 10 carbon atoms and finally $R_{10}$ is also chosen from the -NR$_{12}$R$_{13}$ groups in which $R_{12}$ and $R_{13}$, which are the same or different, are chosen from hydrogen and the alkyl groups containing from 1 to 10 carbon atoms, optionally bearing one or more -OH groups, the aforementioned copolymerizable surfactants and the phosphate ester of methacrylate-terminated polypropylene glycol or one of its salts.

13. Use of the vinylidene chloride polymer latex of any one of claims 8 to 12 for the preparation of films and coatings.

14. Articles comprising an epoxy-containing polymer and a vinylidene chloride polymer, wherein said epoxy-containing polymer comprises an epoxy-containing monomer and optionally at least one comonomer selected from the group consisting of vinyl chloride, vinylidene chloride, styrenic monomers, allylic monomers, vinyl acetate and/or (meth)acrylic monomers corresponding to the general formula (I): $CH_2=CR_1R_2$ in which $R_1$ is chosen from hydrogen and the methyl group and $R_2$ is chosen from the -CN group and the -CO-$R_3$ group in which $R_3$ is chosen from the -OH group, the -O-$R_4$ groups with $R_4$ chosen from the linear or branched alkyl groups containing from 2 to 18 carbon atoms optionally bearing one or more -OH group, the epoxyalkyl groups containing from 2 to 10 carbon atoms and the alkoxyalkyl groups containing a total of 2 to 10 carbon atoms and finally $R_3$ is also chosen from the -NR$_5$R$_6$ groups in which $R_5$ and $R_6$, which are the same or different, are chosen from hydrogen and the alkyl groups containing from 1 to 10 carbon atoms, optionally bearing one or more -OH groups; and wherein said epoxy-containing polymer is **characterized by** a percentage of intact epoxy groups of at least 50%.

## Patentansprüche

1. Verfahren zur Herstellung eines Saatlatex eines epoxidgruppenhaltigen Polymers, **dadurch gekennzeichnet, dass** der Saatlatex durch Radikalpolymerisation eines epoxidgruppenhaltigen Monomers und gegebenenfalls mindestens eines Comonomers in wässriger Emulsion hergestellt wird, **dadurch gekennzeichnet, dass** die Folgenden verwendet werden :

   (A) ein epoxidgruppenhaltiges Monomer und gegebenenfalls mindestens ein Comonomer aus der Gruppe bestehend aus Vinylchlorid, Vinylidenchlorid, Styrolmonomeren, Allylmonomeren, Vinylacetat und/oder (Meth)acrylmonomeren der allgemeinen Formel (I) : $CH_2=CR_1R_2$, wobei $R_1$ aus Wasserstoff und der Methylgruppe ausgewählt ist und $R_2$ aus der -CN-Gruppe und der -CO-$R_3$-Gruppe ausgewählt ist, wobei $R_3$ aus der -OH-Gruppe, den -O-$R_4$-Gruppen, wobei $R_4$ aus den linearen oder verzweigten Alkylgruppen mit 2 bis 18 Kohlenstoffatomen, die gegebenenfalls eine oder mehrere -OH-Gruppen tragen, ausgewählt ist, den Epoxyalkylgruppen mit 2 bis 10 Kohlenstoffatomen und den Alkoxyalkylgruppen mit insgesamt 2 bis 10 Kohlenstoffatomen ausgewählt ist und $R_3$ schließlich auch aus den -NR$_5$R$_6$-Gruppen ausgewählt ist, wobei $R_5$ und $R_6$, die gleich oder verschieden sind, aus Wasserstoff und den Alkylgruppen mit 1 bis 10 Kohlenstoffatomen, die gegebenenfalls eine oder mehrere -OH-Gruppen tragen, ausgewählt sind;
   (B) mindestens ein Radikalbildner;
   (C) mindestens ein Emulgator;
   (D) Wasser,

   wobei das Verfahren folgende Schritte umfasst :

   (1) gegebenenfalls Eintragen mindestens einer Fraktion von (B), mindestens einer Fraktion von (C), mindestens einer Fraktion von (D), gegebenenfalls mindestens einer Fraktion von (A) in einen Reaktor; dann
   (2) Umsetzen des Inhalts des Reaktors bei einem pH-Wert im Bereich von 3 bis 8 unter kontinuierlichem Eintragen des Rests von (A), (B), (C) und (D) und
   (3) Verhalten eines Saatlatex eines epoxidgruppenhaltigen Polymers.

2. Verfahren nach Anspruch 1, **dadurch gekennzeichnet, dass** das epoxidgruppenhaltige Monomer aus der Gruppe bestehend aus Epoxyalkylacrylaten, Epoxyalkylmethacrylaten, Epoxyalkyldiaciylaten, Epoxyalkyldimethacrylaten, Epoxyalkyltriacrylaten, Epoxyalkyltrimethacrylaten, Epoxybutenen, Epoxyalkylbutenen, Epoxypentenen, Epoxyalkylpentenen, Epoxyhexenen, Epoxyalkylhexenen, Epoxyalkylstyrolen und Allylglycidylmonomeren ausgewählt wird.

3. Verfahren nach Anspruch 1, **dadurch gekennzeichnet, dass** es sich bei dem epoxidgruppenhaltigen Polymer um ein Copolymer von Glycidylacrylat, Methylglycidylacrylat, Glycidylmethacrylat oder Methylglycidylmethacrylat handelt.

4. Verfahren nach einem der Ansprüche 1 bis 3, **dadurch gekennzeichnet, dass** die Temperatur in Schritt 2) zwischen 15°C und 60°C liegt.

5. Verfahren zur Herstellung eines Vinylidenchloridpolymerlatex durch Radikalpolymerisation von Vinylidenchlorid und gegebenenfalls mindestens einem Comonomer in wässriger Emulsion, **dadurch gekennzeichnet, dass** die Polymerisation in Gegenwart eines durch das Verfahren nach einem der Ansprüche 1 bis 4 erhaltenen Saatlatex eines epoxidgruppenhaltigen Polymers bei einem pH-Wert von zwischen 3 und 7 erfolgt.

6. Verfahren zur Herstellung eines Vinylidenchloridpolymerlatex durch Mischen des durch das Verfahren nach einem der Ansprüche 1 bis 4 erhaltenen Saatlatex eines epoxidgruppenhaltigen Polymers mit einem separat durch Radikalpolymerisation in wässriger Emulsion erhaltenen Vinylidenchloridpolymerlatex.

7. Verfahren nach Anspruch 5 oder 6, **dadurch gekennzeichnet, dass** die Trockensubstanzmenge von Saatlatex eines epoxidgruppenhaltigen Polymers mindestens 1 Gew.- %, bezogen auf das Gesamtgewicht des Vinylidenchloridpolymers, beträgt.

8. Vinylidenchloridpolymerlatex, umfassend ein epoxidgruppenhaltiges Polymer und ein Vinylidenchloridpolymer, wobei das epoxidgruppenhaltige Polymer ein epoxidgruppenhaltiges Monomer und gegebenenfalls mindestens ein Comonomer aus der Gruppe bestehend aus Venylchlorid, Vinylidenchlorid, Styrolmonomeren, Allylmonomeren, Vinylacetat und/oder (Meth)acrylmonomeren der allgemeinen Formel (I) :

$$CH_2=CR_1R_2 \qquad (I)$$

umfasst, wobei $R_1$ aus Wasserstoff und der Methylgruppe ausgewählt ist und $R_2$ aus der -CN-Gruppe und der -CO-$R_3$-Gruppe ausgewählt ist, wobei $R_3$ aus der -OH-Gruppe, den -O-$R_4$-Gruppen, wobei $R_4$ aus den linearen oder verzweigten Alkylgruppen mit 2 bis 18 Kohlenstoffatomen, die gegebenenfalls eine oder mehrere -OH-Gruppen tragen, ausgewählt ist, den Epoxyalkylgruppen mit 2 bis 10 Kohlenstoffatomen und den Alkoxyalkylgruppen mit insgesamt 2 bis 10 Kohlenstoffatomen ausgewählt ist und $R_3$ schließlich auch aus den -$NR_5R_6$-Gruppen ausgewählt ist, wobei $R_5$ und $R_6$, die gleich oder verschieden sind, aus Wasserstoff und den Alkylgruppen mit 1 bis 10 Kohlenstoffatomen, die gegebenenfalls eine oder mehrere -OH-Gruppen tragen, ausgewählt sind; und wobei das epoxidgruppenhaltige Polymer durch einen Prozentanteil intakter Epoxidgruppen von mindestens 50 % gekennzeichnet ist.

9. Vinylidenchloridpolymerlatex nach Anspruch 8, der Teilchen aus dem epoxidgruppenhaltigen Polymer, die mindestens teilweise durch eine Schale aus Vinylidenchloridpolymer bedeckt ist, umfasst.

10. Vinylidenchloridpolymerlatex nach Anspruch 8, der Teilchen aus dem epoxidgruppenhaltigen Polymer und Teilchen aus dem Vinylidenchloridpolymer umfasst.

11. Vinylidenchloridpolymerlatex nach einem der Ansprüche 8 bis 10, wobei die Trockensubstanzmenge von epoxidgruppenhaltigem Polymer mindestens 1 Gew.- % und höchstens 10 Gew.- %, bezogen auf das Gesamtgewicht des Vinylidenchloridpolymers, beträgt.

12. Verfahren nach einem der Ansprüche 5 bis 7 oder Vinylidenchloridpolymerlatex nach einem der Ansprüche 8 bis 11, **dadurch gekennzeichnet, dass** es sich bei dem Vinylidenchloridpolymer um ein Copolymer handelt, das Vinylidenchlorid in einer Menge von mindestens 50 Gew.- % und als copolymerisierbare Monomere Vinylchlorid und/oder mindestens ein Monomer, das aus Maleinsäureanhydrid, Itaconsäure und den (Meth)acrylmonomeren der allgemeinen Formel (II) :

$$CH_2=CR_8R_9 \qquad (II)$$

wobei $R_8$ aus Wasserstoff und der Methylgruppe ausgewählt ist und $R_9$ aus der -CN-Gruppe und der -CO-$R_{10}$-Gruppe ausgewählt ist, wobei $R_{10}$ aus der -OH-Gruppe und den -O-$R_{11}$-Gruppen, wobei $R_{11}$ aus den linearen oder verzweigten Alkylgruppen mit 1 bis 18 Kohlenstoffatomen, die gegebenenfalls eine oder mehrere -OH-Gruppen tragen, ausgewählt ist, den Epoxyalkylgruppen mit 2 bis 10 Kohlenstoffatomen und den Alkoxyalkylgruppen mit insgesamt 2 bis 10 Kohlenstoffatomen ausgewählt ist und $R_{10}$ schließlich auch aus den -$NR_{12}R_{13}$-Gruppen ausgewählt ist, wobei $R_{12}$ und $R_{13}$, die gleich oder verschieden sind, aus Wasserstoff und den Alkylgruppen mit 1 bis 10 Kohlenstoffatomen, die gegebenenfalls eine oder mehrere -OH-Gruppen tragen, ausgewählt sind, den oben aufgeführten copolymerisierbaren Tensiden und den Phosphatestern von Methacrylat-terminiertem Polypropylenglykol oder einem seiner Salze ausgewählt ist, enthält.

13. Verwendung des Vinylidenchloridpolymerlatex nach einem der Ansprüche 8 bis 12 zur Herstellung von Folien und Beschichtungen.

14. Artikel, umfassend ein epoxidgruppenhaltiges Polymer und ein Vinylidenchloridpolymer, wobei das epoxidgruppenhaltige Polymer ein epoxidgruppenhaltiges Monomer und gegebenenfalls mindestens ein Comonomer aus der Gruppe bestehend aus Vinylchlorid, Vinylidenchlorid, Styrolmonomeren, Allylmonomeren, Vinylacetat und/oder (Meth)acrylmonomeren der allgemeinen Formel (I) :

$$CH_2=CR_1R_2 \qquad (I)$$

umfasst, wobei $R_1$ aus Wasserstoff und der Methylgruppe ausgewählt ist und $R_2$ aus der -CN-Gruppe und der -CO-$R_3$-Gruppe ausgewählt ist, wobei $R_3$ aus der -OH-Gruppe, den -O-$R_4$-Gruppen, wobei $R_4$ aus den linearen oder verzweigten Alkylgruppen mit 2 bis 18 Kohlenstoffatomen, die gegebenenfalls eine oder mehrere -OH-Gruppen tragen, ausgewählt ist, den Epoxyalkylgruppen mit 2 bis 10 Kohlenstoffatomen und den Alkoxyalkylgruppen mit insgesamt 2 bis 10 Kohlenstoffatomen ausgewählt ist und $R_3$ schließlich auch aus den -$NR_5R_6$-Gruppen ausgewählt ist, wobei $R_5$ und $R_6$, die gleich oder verschieden sind, aus Wasserstoff und den Alkylgruppen mit 1 bis 10 Kohlenstoffatomen, die gegebenenfalls eine oder mehrere -OH-Gruppen tragen, ausgewählt sind; und wobei das epoxidgruppenhaltige Polymer durch einen Prozentanteil intakter Epoxidgruppen von mindestens 50 % gekennzeichnet ist.

**Revendications**

1. Procédé de préparation d'un latex germe d'un polymère contenant un groupe époxy, **caractérisé en ce que** ledit latex germe est préparé par polymérisation radicalaire dans une émulsion aqueuse d'un monomère contenant un groupe époxy et éventuellement d'au moins un comonomère, **caractérisé en ce que** les substances suivantes sont utilisées :

   (A) un monomère contenant un groupe époxy et éventuellement au moins un comonomère choisi dans le groupe constitué par le chlorure de vinyle, le chlorure de vinylidène, les monomères styréniques, les monomères allyliques, l'acétate de vinyle et/ou les monomères (méth)acryliques correspondant à la formule générale (I) : $CH_2=CR_1R_2$, dans laquelle $R_1$ est choisi parmi hydrogène et le groupe méthyle, et $R_2$ est choisi parmi le groupe -CN et le groupe -CO-$R_3$, dans lequel $R_3$ est choisi parmi le groupe -OH, les groupes -O-$R_4$ avec $R_4$ choisi parmi les groupes alkyle linéaires ou ramifiés contenant de 2 à 18 atomes de carbone portant éventuellement un ou plusieurs groupes -OH, les groupes époxyalkyle contenant de 2 à 10 atomes de carbone, et les groupes alcoxyalkyle contenant un total de 2 à 10 atomes de carbone, et enfin $R_3$ est également choisi parmi les groupes -$NR_5R_6$ dans lesquels $R_5$ et $R_6$, qui sont identiques ou différents, sont choisis parmi hydrogène et les groupes alkyle contenant de 1 à 10 atomes de carbone, portant éventuellement un ou plusieurs groupes OH ;
   (B) au moins un générateur de radicaux ;
   (C) au moins un émulsifiant ;
   (D) de l'eau,

   ledit procédé comprenant les étapes suivantes :

   (1) l'introduction éventuellement d'au moins une fraction de (B), d'au moins une fraction de (C), d'au moins une fraction de (D), éventuellement d'au moins une fraction de (A) dans un réacteur ; puis
   (2) la mise en réaction du contenu du réacteur à un pH dans la plage allant de 3 à 8, tout en introduisant en continu dans celui-ci le reste de (A), (B), (C) et (D) ; et
   (3) l'obtention d'un latex germe d'un polymère contenant un groupe époxy.

2. Procédé selon la revendication 1, **caractérisé en ce que** le monomère contenant un groupe époxy est choisi dans le groupe des acrylates d'époxyalkyle, des méthacrylates d'époxyalkyle, des diacrylates d'époxyalkyle, des diméthacrylates d'époxyalkyle, des triacrylates d'époxyalkyle, des triméthacrylates d'époxyalkyle, des époxy-butènes, des époxy-alkylbutènes, des époxy-pentènes, des époxy-alkylpentènes, des époxy-hexènes, des époxy-alkylhexènes, des époxy-alkylstyrènes et des monomères allylglycidyliques.

3. Procédé selon la revendication 1, **caractérisé en ce que** le polymère contenant un groupe époxy est un copolymère d'acrylate de glycidyle, d'acrylate de méthylglycidyle, de méthacrylate de glycidyle ou de méthacrylate de méthylglycidyle.

4. Procédé selon l'une quelconque des revendications 1 à 3, **caractérisé en ce que** la température à l'étape 2) est comprise entre 15 °C et 60 °C.

5. Procédé de préparation d'un latex de polymère de chlorure de vinylidène par polymérisation radicalaire dans une émulsion aqueuse de chlorure de vinylidène et éventuellement d'au moins un comonomère, **caractérisé en ce que** la polymérisation a lieu en présence d'un latex germe d'un polymère contenant un groupe époxy obtenu par le procédé selon l'une quelconque des revendications 1 à 4 à un pH compris entre 3 et 7.

**6.** Procédé de préparation d'un latex de polymère de chlorure de vinylidène par mélange du latex germe d'un polymère contenant un groupe époxy obtenu par le procédé selon l'une quelconque des revendications 1 à 4, avec un latex de polymère de chlorure de vinylidène obtenu séparément par polymérisation radicalaire dans une émulsion aqueuse.

**7.** Procédé selon la revendication 5 ou 6, **caractérisé en ce que** la quantité de matière sèche de latex germe d'un polymère contenant un groupe époxy est d'au moins 1 % en poids, par rapport au poids total du polymère de chlorure de vinylidène.

**8.** Latex de polymère de chlorure de vinylidène comprenant un polymère contenant un groupe époxy et un polymère de chlorure de vinylidène, ledit polymère contenant un groupe époxy comprenant un monomère contenant un groupe époxy et éventuellement au moins un comonomère choisi dans le groupe constitué par le chlorure de vinyle, le chlorure de vinylidène, les monomères styréniques, les monomères allyliques, l'acétate de vinyle et/ou les monomères (méth)acryliques correspondant à la formule générale (I) :

$$CH_2=CR_1R_2 \qquad (I)$$

dans laquelle $R_1$ est choisi parmi hydrogène et le groupe méthyle, et $R_2$ est choisi parmi le groupe -CN et le groupe -CO-$R_3$, dans lequel $R_3$ est choisi parmi le groupe -OH, les groupes -O-R-4 avec $R_4$ choisi parmi les groupes alkyle linéaires ou ramifiés contenant de 2 à 18 atomes de carbone portant éventuellement un ou plusieurs groupes -OH, les groupes époxyalkyle contenant de 2 à 10 atomes de carbone, et les groupes alcoxyalkyle contenant un total de 2 à 10 atomes de carbone, et enfin $R_3$ est également choisi parmi les groupes -NR$_5$R$_6$ dans lesquels $R_5$ et $R_6$, qui sont identiques ou différents, sont choisis parmi hydrogène et les groupes alkyle contenant de 1 à 10 atomes de carbone, portant éventuellement un ou plusieurs groupes -OH ; et ledit polymère contenant un groupe époxy étant **caractérisé par** un pourcentage de groupes époxy intacts d'au moins 50 %.

**9.** Latex de polymère de chlorure de vinylidène selon la revendication 8, qui comprend des particules dudit polymère contenant un groupe époxy qui sont au moins partiellement recouvertes par une enveloppe d'un polymère de chlorure de vinylidène.

**10.** Latex de polymère de chlorure de vinylidène selon la revendication 8, qui comprend des particules dudit polymère contenant un groupe époxy et des particules dudit polymère de chlorure de vinylidène.

**11.** Latex de polymère de chlorure de vinylidène selon l'une quelconque des revendications 8 à 10, dans lequel la quantité de matière sèche de polymère contenant un groupe époxy est d'au moins 1 % en poids et d'au plus 10 % en poids, par rapport au poids total du polymère de chlorure de vinylidène.

**12.** Procédé selon l'une quelconque des revendications 5 à 7 ou latex de polymère de chlorure de vinylidène selon l'une quelconque des revendications 8 à 11, **caractérisé en ce que** le polymère de chlorure de vinylidène est un copolymère contenant du chlorure de vinylidène en une quantité d'au moins 50 % en poids et, en tant que monomères copolymérisables, du chlorure de vinyle et/ou au moins un monomère choisi parmi l'anhydride maléique, l'acide itaconique et les monomères (méth)acryliques correspondant à la formule générale (II)

$$CH_2=CR_8R_9 \qquad (II)$$

dans laquelle $R_8$ est choisi parmi hydrogène et le groupe méthyle, et $R_9$ est choisi parmi le groupe -CN et le groupe -CO-$R_{10}$ dans lequel $R_{10}$ est choisi parmi le groupe -OH et les groupes -O-$R_{11}$ avec $R_{11}$ choisi parmi les groupes alkyle linéaires ou ramifiés contenant 1 à 18 atomes de carbone portant éventuellement un ou plusieurs groupes -OH, les radicaux époxyalkyle contenant de 2 à 10 atomes de carbone, et les groupes alcoxyalkyle contenant un total de 2 à 10 atomes de carbone, et enfin $R_{10}$ est également choisi parmi les groupes -NR$_{12}$R$_{13}$ dans lesquels $R_{12}$ et $R_{13}$, qui sont identiques ou différents, sont choisis parmi hydrogène et les groupes alkyle contenant de 1 à 10 atomes de carbone, portant éventuellement un ou plusieurs groupes -OH, les tensioactifs copolymérisables susmentionnés et l'ester de phosphate de polypropylène glycol à terminaison méthacrylate ou un de ses sels.

**13.** Utilisation du latex de polymère de chlorure de vinylidène selon l'une quelconque des revendications 8 à 12 pour la préparation de films et de revêtements.

**14.** Articles comprenant un polymère contenant un groupe époxy et un polymère de chlorure de vinylidène, ledit polymère contenant un groupe époxy comprenant un monomère contenant un groupe époxy et éventuellement au moins un comonomère choisi dans le groupe constitué par le chlorure de vinyle, le chlorure de vinylidène, les monomères styréniques, les monomères allyliques, l'acétate de vinyle et/ou les monomères (méth)acryliques correspondant à la formule générale (I) : $CH_2=CR_1R_2$, dans laquelle $R_1$ est choisi parmi hydrogène et le groupe méthyle, et $R_2$ est choisi parmi le groupe -CN et le groupe -CO-$R_3$, dans lequel $R_3$ est choisi parmi le groupe -OH, les groupes -O-$R_4$ avec $R_4$ choisi parmi les groupes alkyle linéaires ou ramifiés contenant de 2 à 18 atomes de carbone portant éventuellement un ou plusieurs groupes -OH, les groupes époxyalkyle contenant de 2 à 10 atomes de carbone, et les groupes alcoxyalkyle contenant un total de 2 à 10 atomes de carbone, et enfin $R_3$ est également choisi parmi les groupes -N$R_5R_6$ dans lesquels $R_5$ et $R_6$, qui sont identiques ou différents, sont choisis parmi hydrogène et les groupes alkyle contenant de 1 à 10 atomes de carbone, portant éventuellement un ou plusieurs groupes -OH ; et ledit polymère contenant un groupe époxy étant **caractérisé par** un pourcentage de groupes époxy intacts d'au moins 50 %.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 10191788 A

- EP 11305758 A

**Non-patent literature cited in the description**

- **REVILLON.** *J.Polym. Sci,* 1976, vol. 14, 2263